# EUROPÄISCHE PATENTANMELDUNG

(11) **EP 4 681 579 A2**
(43) Veröffentlichungstag der Anmeldung: **21.01.2026**
(21) Anmeldenummer: 25189126.3
(22) Anmeldetag: 11.07.2025
(51) Int. Cl.: A47B 96/02, B65G 1/02

(54) **REGALBODEN FÜR EIN WARENREGAL**

(30) Priorität: 15.07.2024 DE 102024120070
(71) Anmelder: Wanzl GmbH & Co. KGaA, 89340 Leipheim (DE)
(72) Erfinder: Staib, Ralph, 89340 Leipheim (DE); Offenwanger, Frank, 89343 Günzburg (DE)

(57) **Zusammenfassung**

Die Erfindung bezieht sich auf einen Regalboden für ein Warenregal, mit einem Gitterkörper, der mehrere unter Bildung von Zwischenräumen abfolgend nebeneinanderliegend angeordnete Gitterstäbe aufweist, die über Unterzugelemente miteinander verbunden sind, und wenigstens einem Konsolenelement, wobei das Konsolenelement Anbindungsabschnitte aufweist, zur Ankoppelung des Konsolenelementes an eine vertikal tragende Struktur, das Konsolenelement Aussparungen aufweist, die auf die Geometrie des Gitterkörpers abgestimmt sind, so dass Abschnitte der Unterzugelemente in die Aussparungen einsetzbar sind, die Gitterstäbe unter zueinander parallel angeordnet sind und im Ankoppelungsbereich des Konsolenelementes an den Gitterkörper durch Auslassung eines Gitterstabes oder erweiterte Beabstandung benachbarter Gitterstäbe eine Auslassungszone bereitgestellt ist und das Konsolenelement partiell in einen derart von einem Gitterstab frei gehaltenen Hüllraumbereich der Gitterstäbe eintaucht.

## Beschreibung

Die Erfindung bezieht sich auf einen Regalboden für ein Warenregal mit einem Gitterkörper, der mehrere voneinander beabstandete und hierbei Zwischenräume bildende Gitterstäbe aufweist, die über Unterzugelemente miteinander verbunden sind und wenigstens einem Konsolenelement, das Anbindungsabschnitte aufweist zur Ankoppelung des Konsolenelementes an eine vertikal tragende Struktur, wobei das Konsolenelement Aussparungen aufweist welche auf die Geometrie des Gitterkörpers derart abgestimmt, dass Abschnitte der Unterzugelemente in die Aussparungen des Konsolenelementes einsetzbar sind. Die Gitterstäbe sind dabei unter gleicher Teilung zueinander parallel angeordnet und erstrecken sich in einem Gitterstab-Hüllraum in der Gestalt eines flachen Rechteckquaders.

Ein Regalboden der oben genannten Art ist aus EP 2 309 836 B1 bekannt. Die Koppelung des Gitterkörpers mit dem Konsolenelement erfolgt unter Ineingriffbringung von Komplementärgeometrien, und der Gitterkörper wird hierbei in die Komplementärgeometrien des Konsolenelementes eingeschwenkt.

Aus EP 2 389 838 B1 ist ebenfalls ein Regalboden der oben genannten Art bekannt, wobei die Konsolen im Seitenbereich des Gitterkörpers an diesen angesetzt sind und hierbei Endabschnitte der Unterzugelemente in Ausschnitte der Konsolen eingreifen.

Der Erfindung liegt die Aufgabe zugrunde, Lösungen aufzuzeigen durch welche es möglich wird, einen Regalboden zu schaffen, der unter fertigungstechnischen Gesichtspunkten, sowie auch im Rahmen seines Einsatzes in einem Regalsystem Vorteile gegenüber bisherigen Bauformen bietet.

Diese Aufgabe wird erfindungsgemäß gelöst durch einen Regalboden für ein Warenregal, mit:
- einem Gitterkörper, der mehrere unter Bildung von Zwischenräumen abfolgend nebeneinanderliegend angeordnete Gitterstäbe aufweist, die über Unterzugelemente miteinander verbunden sind, und
- wenigstens einem Konsolenelement, wobei
- das Konsolenelement Anbindungsabschnitte aufweist, zur Ankoppelung des Konsolenelementes an eine vertikal tragende Struktur,
- das Konsolenelement Aussparungen aufweist, die auf die Geometrie des Gitterkörpers abgestimmt sind, so dass Abschnitte der Unterzugelemente in die Aussparungen einsetzbar sind,
- die Gitterstäbe zueinander parallel angeordnet sind und im Ankoppelungsbereich des Konsolenelementes an den Gitterkörper durch Auslassung eines Gitterstabes oder erweiterte Beabstandung benachbarter Gitterstäbe eine Auslassungszone bereitgestellt ist und
- das Konsolenelement partiell in einen derart von einem Gitterstab frei gehaltenen Bereich des die Gitterstäbe einfassenden Hüllraumes eintaucht.

Dadurch wird es auf vorteilhafte Weise möglich, einen Regalboden zu schaffen, bei welchem das jeweilige Konsolenelement in seinem Anbindungsbereich an den Gitterkörper einen Gitterstab substituiert und mit seiner oberen Kante die Tragfunktion des substituierten Gitterstabes übernimmt. Für das Konsolenelement ergibt sich ein Bauraumgewinn, der es ermöglicht, die Höhe des Konsolenelementes um die Höhe eines Gitterstabes zu erweitern wodurch ein Festigkeitszuwachs erreicht wird. Zudem wird die Bildung von Spalten zwischen Gitterstab und Konsolenelement vermieden.

Es besteht auch die Möglichkeit, das Konsolenelement zwischen den Teilungen einzusetzen.

Der Regalboden ist vorzugsweise so ausgebildet, dass der Hüllraum der Gitterstäbe im wesentlichen ein flache quaderartige Gestalt aufweist. Die Gitterstäbe sind in diesem Hüllraum unter gleicher Teilung benachbart angeordnet. Die Oberseite des Hüllraumes definiert eine Warenaufstandsebene. Die Oberkante des Konsolenelementes ragt an diese Warenaufstandsebene heran.

Insgesamt wird gemäß einem besonderen Aspekt der vorliegenden Erfindung der Regalboden so gestaltet, dass der Angriff eines Konsolenelementes an den Gitterkörper an einer Position erfolgt, an welcher nach Maßgabe der Teilung der weiteren Gitterstäbe prinzipiell ein Gitterstab positioniert wäre und die Tragfunktion dieses Gitterstabes durch einen oberen Kantenbereich des Konsolenelementes übernommen wird indem dieser obere Kantenbereich des Konsolenelementes von unten unter Durchgriff des Hüllraumes an dessen obere Seite, d.h. die Oberseite des Hüllraumes heranragt. Das Konsolenelement und der Gitterkörper sind damit derart aufeinander abgestimmt ausgebildet, dass in einem Fügezustand der beiden Strukturen eine Oberkante des Konsolenelementes mit einer durch die Gitterstäbe definierten oberen Warenaufstandsebene bündig abschließt.

Das Konsolenelement ist vorzugsweise aus einem Blechmaterial ausgeschnitten. Die Wanddicke oder Stärke dieses Blechmaterials entspricht vorzugsweise der Dicke oder dem Durchmesser der Gitterstäbe. Das Konsolenelement kann auch als Umformteil oder als gefaltetes oder doppelwandiges Bauteil gefertigt sein. Das Konsolenelement kann auch als Drahtbiegeteil gefertigt sein.

Der Regalboden wird vorzugsweise durch zwei Konsolenelemente getragen. Diese Konsolenelemente befinden sich vorzugsweise im Bereich der linken und rechten Seitenenden des Regalbodens oder auch in einem Zwischenbereich zwischen den seitlichen Enden und den sog. Besselschen Punkten. Vorzugsweise sind zwischen den Konsolen und den Seitenenden des Gitterkörpers noch weitere Gitterstäbe, beispielsweise sechs bis zehn, insbesondere neun Gitterstäbe vorgesehen, so dass das jeweilige Konsolenelement nicht direkt den Seitenabschluss des Regalbodens bildet.

Die Konsolenelemente können so gestaltet sein, dass diese den Regalboden in einer Ausrichtung tragen, in welchem die durch den Hüllraum der Gitterstäbe definierte Warenaufstandsebene eine horizontale Ausrichtung aufweist. Die Konsolenelemente können auch so gestaltet sein, dass der Regalboden geneigt ausgerichtet ist, so dass insbesondere die vordere Querkante des Regalbodens horizontal auf einem Höhenniveau verläuft, das unter dem Höhenniveau der hinteren Abschlusskante des die Gitterstäbe einfassenden Hüllraumes verläuft.

Hierbei kann es sich weiterhin als vorteilhaft erweisen, dass die vordere Kante höher als die Hinterkante des Regalbodens verläuft. Dies nenne sich Vorsteigung.

Die Ausrichtung des Regalbodens kann insbesondere dadurch festgelegt werden, in welcher Ausrichtung das jeweilige Konsolenelement an einer dieses tragenden Struktur, insbesondere Vertikalständer angebracht wird. Die Befestigung des Konsolenelementes an dem Vertikalständer erfolgt vorzugsweise durch Haltegeometrien durch welche das Konsolenelement an dem Vertikalständer angreift oder in diesen eingreift.

Der Regalboden ist weiterhin vorzugsweise derart ausgebildet, dass die Gitterstäbe des Gitterkörpers durch einen frontseitigen Querstab verbunden sind, wobei der Querstab von unten her an die Gitterstäbe angesetzt und mit diesen vorzugsweise verschweißt ist.

Der Regalboden ist weiterhin vorzugsweise derart gestaltet, dass die Unterzugelemente aus einem Flachmaterial gefertigt sind. Die Unterzugelemente und die Gitterstäbe sind vorzugsweise miteinander verschweißt. Der Flachmaterialstreifen kann fertigungstechnisch so vorbereitet werden, dass dieser kleine wannenartige Auflagemulden für die Kontaktierung der Gitterstäbe vorsieht, wobei in diesen Auflagemulden nochmals kleine Vorsprünge bereitgestellt sind, welche im Rahmen eines Presschweißprozesses das Material zur Ausbildung der Pressverbindungsstelle bereitstellen. Die Auflagemulden können stanz- oder Schneidtechnisch vorbereitet werden, der kleine Materialüberstand zur Bildung der Schweißstelle kann umformtechnisch gebildet werden. Die Gestaltung des Überstandes in der Ausmuldung ist vorzugsweise so getroffen, dass im Rahmen der Pressverschweißung kein Material in den Winkelbereich zwischen dem jeweiligen Stab und der Wandung des Konsolenelementes hineingeprsst wird und sich somit eine flächige Schweißverbindungsstelle ohne, oder ohne sich erheblich seitlich der Schweißstelle herauswölbenden Materialwulst bildet.

In einer weiterführenden Form finden zwei oder mehr frontseitge Querstäbe Einsatz. Diese können in bekannter Weise oder aber ja nach Anforderung an die Etage an den Gitterstäben des Gitterkörpers angeordnet sein.

Das in Eingriff bringen des Gitterkörpers mit dem Konsolenelement erfolgt vorzugsweise unter temporärer elastischer Deformation des Gitterkörpers insbesondere eines Abschnitts eines Unterzugelementes und/oder leichter elastischer Biegung der Gitterstäbe. Es können dann in verrastetem Zustand Abschnitte der Unterzugelemente in Ausnehmungen des jeweiligen Konsolenelementes sitzen und in dieser Position durch Nasen, Anschläge oder Vorsprünge im Bereich der Ausnehmung an einem Herauswandern gehindert sein.

Die Gestalt und die Position der Ausnehmungen in dem Konsolenelement kann so auf die Geometrie des Gitterkörpers abgestimmt sein, dass das in Eingriff bringen des Gitterkörpers mit dem Konsolenelement in Verbindung mit einer Einschwenkbewegung erfolgt, wobei kurz vor Erlangung des Fügezustandes Strukturen des Gitterbodens und Strukturen der Konsole durch elastische Deformation gegeneinander verlagert werden und bei Erlangung der Fügestellung zurückwandern und sich in diesem Zustand insgesamt eine Sperrung oder Verriegelung ergibt.

Der Regalboden kann derart ausgebildet sein, dass über diesen wägetechnische Prozesse abwickelbar sind. Hierzu können insbesondere an den Konsolen Messorgane oder Sensoren vorgesehen sein, welche Signale generieren die indikativ sind für das Gewicht oder eine Gewichtsveränderung der auf dem Regalboden abgestellten Waren. Es können hierbei an die Konsolen oder den Gitterboden mehrere Sensoren angebunden sein, so dass im Wege einer kombinierten Signalauswertung auch die Entnahmeposition einer Ware und ggf. deren Gewicht ermittelt werden kann. Der Regalboden kann damit eine Komponente eines Erfassungssystems bilden durch welches eine Warenpräsenz in einem Regal oder die Entnahme und der Entnahmeort einer Ware aus dem Regal sensortechnisch erfasst werden kann.

Weitere Einzelheiten und Merkmale der Erfindung ergeben sich aus der nachfolgenden Beschreibung in Verbindung mit der Zeichnung. Es zeigt:
- **Figur 1**: eine perspektivische Darstellung eines erfindungsgemäßen Regalbodens mit zwei in diesen eingebundenen Konsolenelementen, wobei die Konsolenelemente letztlich zwei Gitterstäbe des Gitterkörpers substituieren und deren Raum erfüllen;
- **Figur 2**: eine perspektivische Darstellung ausschließlich des Gitterkörpers des erfindungsgemäßen Regalbodens nach Figur 1 ohne Konsolenelemente und somit erkennbaren Gitterstab-Freilassungen;
- **Figur 3**: eine perspektivische Darstellung eines Konsolenelementes des erfindungsgemäßen Regalbodens nach Figur 1;
- **Figur 4**: eine perspektivische Darstellung des Unterzugelementes eines erfindungsgemäßen Regalbodens mit daran ausgebildeten Aussparungen die in Aussparungen des entsprechenden Konsolenelementes eingreifen;
- **Figur 5**: eine Seitenansicht des Regalbodens in einem Zustand mit noch nicht vollständig in das Konsolenelement eingeschwenktem Gitterkörper.

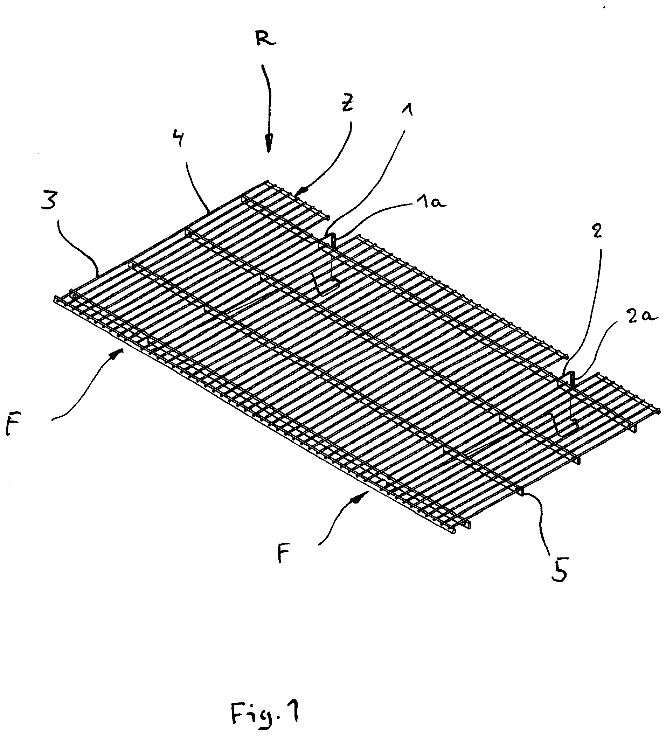

Die Darstellung nach Figur 1 zeigt einen erfindungsgemäßen Regalboden R für ein Warenregal. Dieser besteht aus einem Gitterkörper 3, der mehrere unter Bildung von Zwischenräumen Z abfolgend nebeneinanderliegend angeordnete Gitterstäbe 4 aufweist, die über Unterzugelemente 5 miteinander verbunden sind. Zudem umfasst der Regalboden ein erstes Konsolenelement 1 und ein zweites Konsolenelement 2, wobei beide Konsolenelemente 1, 2 Anbindungsabschnitte 1a, 2a aufweisen zur Ankoppelung des Konsolenelementes 1, 2 an eine hier nicht weiter dargestellte, an sich bekannte vertikal tragende Struktur.

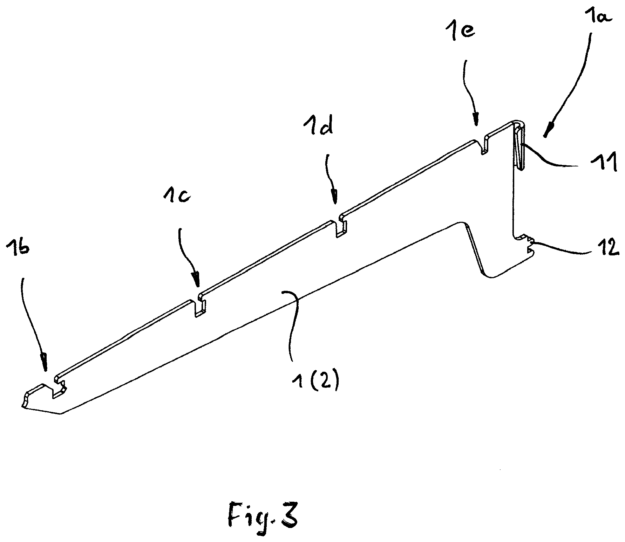

Weiterhin weist jedes der Konsolenelemente 1, 2 Aussparungen (vgl. Fig. 3 1,b, 1c, 1d, 1e) auf, die auf die Geometrie des Gitterkörpers 3 abgestimmt sind, so dass Abschnitte der Unterzugelemente 5 in die Aussparungen einsetzbar sind. Die Gitterstäbe 4 sind unter zueinander parallel angeordnet und im Ankoppelungsbereich des jeweiligen Konsolenelementes 1, 2 an den Gitterkörper 3 ist durch Auslassung jeweils eines Gitterstabes 4 oder erweiterte Beabstandung benachbarter Gitterstäbe 4 eine Auslassungszone F bereitgestellt. Das jeweilige Konsolenelement 1, 2 taucht partiell in einen derart von einem Gitterstab 4 frei gehaltenen Hüllraumbereich der Gitterstäbe 4 ein.

Der durch die Gesamtheit der Gitterstäbe 4 definierte Hüllraum weist eine im wesentlichen flache quaderartige Gestalt auf. Die Gitterstäbe 4 sind unter gleicher Teilung benachbart angeordnet.

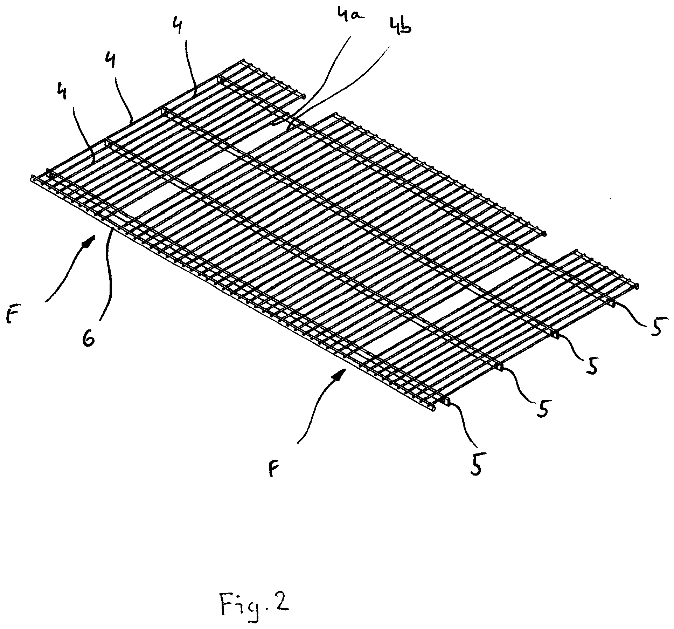

Wie aus der Darstellung nach Figur 2 erkennbar, erfolgt der Angriff eines Konsolenelementes an den Gitterkörper 3 an einer Position, an welcher nach Maßgabe der Teilung der Gitterstäbe 4 ein Gitterstab 4 positioniert wäre und die Tragfunktion dieses nicht vorhandenen Gitterstabes 4 wird durch einen oberen Kantenbereich des Konsolenelementes 1, 2 übernommen, indem dieser obere Kantenbereich von unten unter Durchgriff des Hüllraumes der Gitterstäbe 4 an dessen obere Seite heranragt. Das Konsolenelement 1, 2 und der Gitterkörper 3 sind derart aufeinander abgestimmt ausgebildet, dass in einem Fügezustand der beiden Strukturen eine Oberkante des Konsolenelementes 1, 2 mit einer durch die Gitterstäbe 4 definierten oberen Warenaufstandsebene bündig abschließt.

Die Gitterstäbe 4 des Gitterkörpers 3 sind durch einen frontseitigen Querstab 6 verbunden, wobei der Querstab 6 von unten her an die Gitterstäbe 4 angesetzt ist. Die Unterzugelemente 5 sind aus einem Flachmaterial gefertigt. Die Unterzugelemente 5 und die Gitterstäbe 4 sind miteinander verschweißt.

Bei dem hier dargestellten Ausführungsbeispiel sind zudem die er Freilassungszone benachbarten Gitterstäbe 4a, 4b verkürzt ausgebildet. Es entsteht hierdurch ein Freiraum durch welchen ein Vertikalpfosten des den Regalboden tragenden Regalträgers hindurchreichen kann. An diesem Vertikalpfosten wird das Konsolenelement 1 auf einem gewünschten Höhenniveau fixiert.

Die Darstellung nach Figur 3 veranschaulicht den Aufbau und die Gestaltung eines Konsolenelementes 1 (2). An diesem Konsolenelement 1 sind Aussparungen 1b, 1c, 1d, 1e erkennbar, in welchen in Fügestellung des Gitterkörpers 3 an das Konsolenelement 1 die Unterzugelemente 5 sitzen. In dieser Darstellung ist auch der Anbindungsabschnitt 1a des Konsolenelementes 1 erkannbar, durch welchen das Konsolenelement 1 an einem Vertikalpfosten arretierbar ist. Der Anbindungsabschnitt 1a umfasst bei diesem Ausführungsbeispiel einen in Montagestellung auf Zug belasteten oberen Hakenabschnitt 11 und einen unteren in Montagestellung auf Druck belasteten Einsteckabschnitt 12. Das Konsolenelement 1 kann werkzeuglos in dem entsprechenden Regal montiert werden. Es ist möglich, die Konsolenelemente 1 (2) zunächst ohne Gitterboden 3 zu montieren und dann die Gitterböden aufzusetzen. Vorzugsweise jedoch werden die Konsolenelemente 1, 2 zunächst an dem Gitterboden 3 montiert und die so geschaffene Einheit dann in den Regalständer eingehängt.

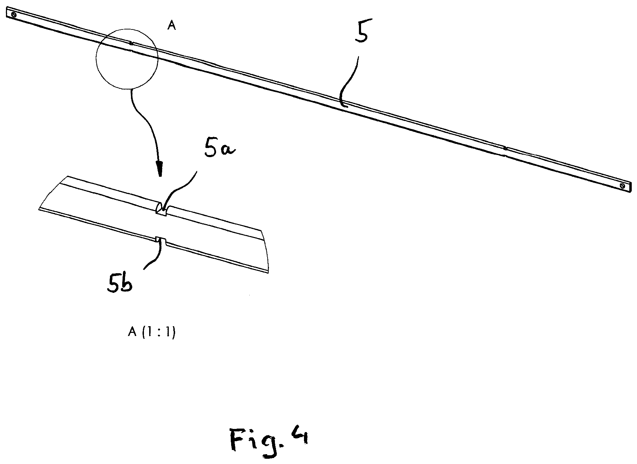

Die Darstellung nach Figur 4 zeigt ein Unterzugelement 5. Dieses besteht hier aus einem Flachmaterial, insbesondere einem gewalzten Stahlprofil. An dem Unterzugelement 5 sind kleine Aussparungen 5a, 5b ausgebildet. Diese Aussparungen 5a, 5b bilden Wandungen die eine Anschlagfunktion generieren und hierbei insbesondere die Seitenposition des jeweiligen Konsolenelementes 1, 2 in dem durch Weglassung eines Gitterstabes 4 bereitgehaltenen Freiraum F festlegen. Zudem können in diese Aussparung 5 a auch Nasen eingreifen, die in den Ausnehmungen 1b, 1c, 1d des Konsolenelementes 1 (vgl. Fig. 3) ausgebildet sind.

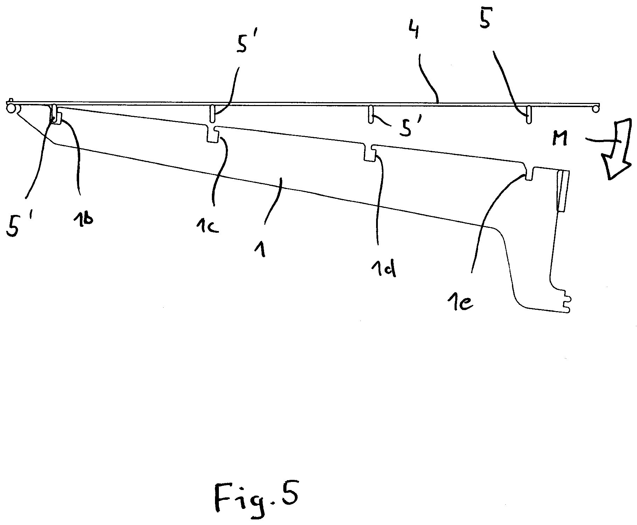

Wie aus der Darstellung nach Figur 5 erkennbar erfolgt das in Eingriff bringen des Gitterkörpers 3 mit dem Konsolenelement 1 in Verbindung mit einer Einschwenkbewegung M erfolgt, wobei kurz vor Erlangung des Fügezustandes Strukturen des Gitterbodens 3 und Strukturen der Konsole 1 durch elastische Deformation gegeneinander verlagert werden und bei Erlangung der Fügestellung zurückwandern und in dieser Position eine Sperrung bewirken. Das in Eingriff bringen des Gitterkörpers 3 mit dem Konsolenelement 5 erfolgt unter temporärer elastischer Deformation des Gitterkörpers 3 insbesondere eines Abschnitts eines Unterzugelementes und/oder leichter elastischer Biegung der Gitterstäbe 4. Zunächst tauchen die in dieser Darstellung erkennbaren drei linken Unterzugelemente 5' in die Aussparungen 1c, 1d, 1e ein und die oben an den Aussparungen 1c, 1d, 1e ausgebildeten Nasen tauchen in die Aussparungen 5a (vgl. Fig. 4) der Unterzugelemente 5 ein. Nunmehr steht das in dieser Darstellung rechte Unterzugelement im Umgebungsbereich der Ausnehmung 1e an dem Material des Konsolenelementes 1 an. Durch Belastung des Gitterkörpers 3 biegen sich die Gitterstäbe 4 leicht durch und das Unterzugelement 5 schnappt in die Ausnehmung 1e ein. In diesem Zustand ist der Gitterkörper 3 an dem Konsolenelement 1 gesichert. Insbesondere hinsichtlich der Koppelung des Gitterkörpers 3 mit dem Konsolenelement wird der Offenbarungsinhalt der eingangs genannten Druckschriften EP 2 389 838 B1 und EP 2 389 836 B1 vollumfänglich in die vorliegende Beschreibung der Erfindung mit eingebunden.

Bei dem vorangehend beschriebenen Ausführungsbeispiel sind die Gitterstäbe 4 unter gleicher Teilung zueinander beabstandet angeordnet und nur in jenem Bereich in welchem jeweils ein Konsolenelement an dem Gitterkörper angreift ist ein Fenster freigelassen indem dort kein Gitterstab 4 vorgesehen ist. Das erfindungsgemäße Konzept kann auch in der Weise umgesetzt werden, dass das Konsolenelement in einen Zwischenraum zwischen zwei Gitterstäben eindringt und von unten her bis an die Warenaufstandsebene herantritt. Die Unterzugselemente können auch aus einem Rundmaterial gefertigt werden oder auch aus zwei parallel liegenden Rundmaterialstäben gefertigt werden.

Die Konsolenelemente sind hier als Schneid- oder Stanzteile aus einem Plattenmaterial gefertigt. Sie können auch als Drahtbiegeteile gefertigt werden oder als doppelwandige Bauteile, insbesondere mit einem nach oben geschlossenen U-Querschnitt.

Insbesondere bei der Einreihung der Konsolen in den Gitterkörper 3 unter Wahrung der Teilung der Gitterstäbe 4 ist es möglich, die Konsolen 1, 2 optisch unauffällig in den Regalboden zu integrieren so dass sich ein ansprechendes Erscheinungsbild ergibt. Ein in Montageposition des Konsolenelementes oberer Kantenbereich des Konsolenelementes erstreckt sich damit in dem Gitterboden 3 an einer Stelle die ansonsten von einem Gitterstab 4 belegt wäre. Das Konsolenelement 1 ersetzt damit einen Gitterstab und nutzt den hierbei frei werdenden Bauraum und verschafft sich dabei einen Festigkeitszuwachs.

## Patentansprüche

1. Regalboden für ein Warenregal, mit:
- einem Gitterkörper, der mehrere unter Bildung von Zwischenräumen abfolgend nebeneinanderliegend angeordnete Gitterstäbe aufweist, die über Unterzugelemente miteinander verbunden sind, und
- wenigstens einem Konsolenelement, wobei
- das Konsolenelement Anbindungsabschnitte aufweist, zur Ankoppelung des Konsolenelementes an eine vertikal tragende Struktur,
- das Konsolenelement Aussparungen aufweist, die auf die Geometrie des Gitterkörpers abgestimmt sind, so dass Abschnitte der Unterzugelemente in die Aussparungen einsetzbar sind,
- die Gitterstäbe zueinander parallel angeordnet sind und im Ankoppelungsbereich des Konsolenelementes an den Gitterkörper durch Auslassung eines Gitterstabes oder erweiterte Beabstandung benachbarter Gitterstäbe eine Auslassungszone bereitgestellt ist und
- das Konsolenelement partiell in einen derart von einem Gitterstab frei gehaltenen Hüllraumbereich der Gitterstäbe eintaucht.

2. Regalboden nach Anspruch 1, **dadurch gekennzeichnet, dass** der Hüllraum der Gitterstäbe im wesentlichen ein flache quaderartige Gestalt aufweist.

3. Regalboden nach Anspruch 1 oder 2, **dadurch gekennzeichnet, dass** die Gitterstäbe unter gleicher Teilung benachbart angeordnet sind.

4. Regalboden nach wenigstens einem der Ansprüche 1 bis 3, **dadurch gekennzeichnet, dass** der Angriff eines Konsolenelementes an den Gitterkörper an einer Position erfolgt, an welcher nach Maßgabe der Teilung der Gitterstäbe ein Gitterstab positioniert wäre und die Tragfunktion dieses Gitterstabes durch einen oberen Kantenbereich des Konsolenelementes übernommen wird, indem dieser obere Kantenbereich von unten unter durchgriff des Hüllraumes an dessen obere Seite heranragt.

5. Regalboden nach wenigstens einem der Ansprüche 1 bis 4, **dadurch gekennzeichnet, dass** das Konsolenelement und der Gitterkörper derart aufeinander abgestimmt ausgebildet sind, dass in einem Fügezustand der beiden Strukturen eine Oberkante des Konsolenelementes mit einer durch die Gitterstäbe definierten oberen Warenaufstandsebene bündig abschließt.

6. Regalboden nach wenigstens einem der Ansprüche 1 bis 5, **dadurch gekennzeichnet, dass** die Gitterstäbe des Gitterkörpers durch einen frontseitigen Querstab verbunden sind, wobei der Querstab von unten her an die Gitterstäbe angesetzt ist.

7. Regalboden nach wenigstens einem der Ansprüche 1 bis 6, **dadurch gekennzeichnet, dass** die Unterzugelemente aus einem Flachmaterial gefertigt sind und/oder dass die Unterzugelemente und die Gitterstäbe miteinander verschweißt sind.

8. Regalboden nach wenigstens einem der Ansprüche 1 bis 7, **dadurch gekennzeichnet, dass** das in Eingriff bringen des Gitterkörpers mit dem Konsolenelement unter temporärer elastischer Deformation des Gitterkörpers insbesondere eines Abschnitts eines Unterzugelementes und/oder leichter elastischer Biegung der Gitterstäbe bewerkstelligt wird.

9. Regalboden nach wenigstens einem der Ansprüche 1 bis 8, **dadurch gekennzeichnet, dass** das in Eingriff bringen des Gitterkörpers mit dem Konsolenelement in Verbindung mit einer Einschwenkbewegung erfolgt, wobei kurz vor Erlangung des Fügezustandes Strukturen des Gitterbodens und Strukturen der Konsole durch elastische Deformation gegeneinander verlagert werden und bei Erlangung der Fügestellung zurückwandern und in dieser Position eine Sperrung bewirken.

10. Regalboden für ein Warenregal, mit:
- einem Gitterkörper, der mehrere unter Bildung von Zwischenräumen abfolgend nebeneinanderliegend angeordnete Gitterstäbe aufweist, die über Unterzugelemente miteinander verbunden sind, und
- wenigstens einem Konsolenelement, wobei
- das Konsolenelement Anbindungsabschnitte aufweist, zur Ankoppelung des Konsolenelementes an eine vertikal tragende Struktur,
- das Konsolenelement Aussparungen aufweist, die auf die Geometrie des Gitterkörpers abgestimmt sind, so dass Abschnitte der Unterzugelemente in die Aussparungen einsetzbar sind,
- die Gitterstäbe unter zueinander parallel angeordnet sind und
- das Konsolenelement und der Gitterkörper derart aufeinander abgestimmt ausgebildet sind, dass in einem Fügezustand der beiden Strukturen eine Oberkante des Konsolenelementes mit einer durch die Gitterstäbe definierten oberen Warenaufstandsebene bündig abschließt.
